(19) Europäisches Patentamt
European Patent Office
Office européen des brevets

(11) Publication number: **0 434 831 A1**

(12) # EUROPEAN PATENT APPLICATION published in accordance with Art. 158(3) EPC

(21) Application number: **90917904.6**

(51) Int. Cl.[5]: **C22B 3/00**, C22B 13/10

(22) Date of filing: **22.06.90**

(86) International application number:
**PCT/ES90/00019**

(87) International publication number:
**WO 91/00931 (24.01.91 91/03)**

(30) Priority: **13.07.89 ES 8902487**

(43) Date of publication of application:
**03.07.91 Bulletin 91/27**

(84) Designated Contracting States:
**AT BE CH DE DK ES FR GB IT LI LU NL SE**

(71) Applicant: **CONSEJO SUPERIOR DE INVESTIGACIONES CIENTIFICAS**
**Serrano, 117**
**E-28006 Madrid(ES)**

Applicant: **LABORATORIO NACIONAL DE ENGENHARIA E TECNOLOGIA INDUSTRIAL**
**Estrada do Paco Lumiar**
**P-Lisboa(PT)**

(72) Inventor: **LIMPO GIL, José, Luis**
**Centro Nacional Investigaciones Gregorio del Amo**
**E-28006 Madrid(ES)**
Inventor: **FIGUEIREDO, J.M.**
**Laborat rio Nacional Estrada do Paco Lumiar**
**P-Lisboa(PT)**
Inventor: **AMER AMEZAGA, Sebastian**
**Centro Nacion.de Investigaciones Gregorio del Amo**
**E-28040 Madrid(ES)**
Inventor: **LUIS MARTIN, Angel**
**Centro Nacion. de Investigaciones Gregorio del Amo**
**E-28040 Madrid(ES)**

(74) Representative: **Ungria Lopez, Javier**
**Avda. Ramon y Cajal, 78**
**E-28043 Madrid(ES)**

(54) **METHOD FOR THE RECOVERY OF ZINC, COPPER AND LEAD OF OXIDIZED AND/OR SULFURIZED ORES AND MATERIALS.**

(57) Method for the recovery of zinc, copper and lead of oxidized and/or sulfurized ores and materials from various feedstocks by lixiviation with a concentrated solution of sal ammoniac, resulting in the formation of the corresponding amines, and separation of those metals from the fertile solution obtained by means of organic acid extractants (cationic extractants and/or chelators) which are neutralized by the amine regenerating the original solution of sal ammoniac. The copper and zinc which separately have passed the corresponding organic phase are reextracted therefrom taking advantage of the sulphuric acid obtained in the electrolysis of the corresponding solution. The lead is separated by crystallization and obtained in the form of chloride.

EP 0 434 831 A1

# METHOD FOR THE RECOVERY OF ZINC, COPPER AND LEAD OF OXIDIZED AND/OR SULFURIZED ORES AND MATERIALS

## Prior art

Most of the production of zinc, copper and lead comes from treating their sulfurized ores (sphalerite, chalcopyrite and galena,) which at times are found in nature so closely associated with one another and with pyrite that it is difficult to obtain concentrated of enough purity for treatment thereof by conventional methods.

There are also a series of by-products generally from the metallurgic industry in which those elements are found, also associated, in the form of oxides. Such is the case of Waeltz oxides obtained in treatment of dust from steel mills or those which are collected in the dedusting of gases in lead and copper casting. Zinc is normally the main element in these materials and as feedstock thereof it tends to benefit in some specially prepared castings, although strongly hindering them by the presence of certain elements.

One solution, in the case of sulfurized ores, is direct lixiviation by means of solutions, generally chloridized (sodium chloride, cupric chloride or iron - ferrous or ferric - chloride) about which there is a very extensive bibliography.

The present invention uses as a lixiviation medium ammonium chloride solutions upon whose use there is, on the contrary, a very scarce bibliography with the particularity that its use is claimed based exclusively on the high concentration that this salt can attain in water.

## Brief description of the invention

The present invention describes a method for the recovery of zinc and copper, as well as of other valuable elements, from diverse feedstocks by means of lixiviation with a concentrated ammonium chloride solution, which gives rise to the formation of the corresponding amines, and separation of those metals from the fertile solution obtained by means of organic acid extractants (cationic and/or chelating extractants) which are neutralized by the amine regenerating the original ammonium chloride solution. The copper and zinc which, separately, have passed to the organic phase are reextracted therefrom taking advantage of the sulfuric acid obtained in the electrolysis of the corresponding solution.

Hydrometallurgic treatment consists of a group of steps that form two operational blocks, which together form a closed circuit. In the first one the metallic values of interest contained in the material are solubilized in the form of amines; in the second block the solution is treated, recovering each one of the dissolved metallic values and regenerating the lixiviation solution, whereby the circuit is closed.

## Detailed description of the invention

The present invention not only takes advantage of the lixiviating effect of the chloride ion but also of the property of the ammonium cation capable of giving the protons necessary

$$NH_4^+ \rightleftharpoons NH_3 + H^+$$

for lixiviation of the sulfides as well as of the oxides, producing at the same time ammonia, which complexes most of the common metal ions ($Cu^{2+}$, $Zn^{2+}$, $Ag^+$, $Hg^{2+}$, $Co^{2+}$, ...) except lead which is only complexed by the $Cl^-$ ion.

Upon lixiviating the feedstocks to be processed, the reaction which we can write in a simplified form, depending on whether it is a sulfide or an oxide, as $SMe + 2ClNH_4 + 1/2O_2 \rightarrow S + Me(NH_3)_2^{2+} + 2Cl^- + H_2O$ (1) $MeO + 2ClNH_4^+ \rightarrow Me(NH_3)_2^{2+} + 2Cl + H_2O$ (2) takes place.

(Note: To simplify the writing and adjustment of the stoichiometry the reaction has been written as if only the diamine of the metallic cation were formed when three types of ions of formula

$Cl_mMe(NH_3)_n^{2-m}$, $Cl_nMe^{2-n}$ and $Me(NH_3)_n^{2+}$)

are formed.

For lead, upon not forming amine complexes, there is

$SPb + 4ClNH_4 + 1/2O_2$ -->

--> $S + Cl_4Pb^{2-} + 2NH_3 + 2NH_4 + H_2O$ (1')

$PbO + 4ClNH_4^+$ -- $Cl_4Pb^{2-} + 2NH_3 + 2NH_4^+ + H_2O$ (2')

However, the ammonia freed when the lead is not a main element, is consumed by the secondary reactions (for example (8) which is cited hereinafter) producing acids.

Once the metals of the feedstock have been solubilized and after conventional treatments of decanting, filtration, etc., and some specific ones which we will set forth hereinafter to separate most of the different metals from copper and zinc, the latter are isolated from the solution by means of extraction with acid solvents, which here have the particularity of not needing neutralization, since this operation is done by the ammonia joined to the metal.

Conventional method
$Cl_3Me^- + RH_2 + 2OH^-$ ---> $RMe + 3Cl^- + 2H_2O$ (3)

($RH_2$, acid organic solvent)

Proposed method
$Cl_3Me(NH_3)_2^- + RH_2$ ---> $RMe + 3Cl^- + 2NH_4^-$ (4)

Thus, while in the conventional method it is necessary to add a neutralizer which furnishes the $OH^-$ ions (generally calcium or ammonium hydroxide) forming the corresponding salt with the $Cl^-$ ion which must be eliminated, in this method the neutralizer is the amine itself of the metal, formed according to reactions (1) and/or (2) cited above with ammonium chloride, which is regenerated in the extraction reaction (4) in order to be able to be used again.

Another advantage of this method is that due to the neutral pH of the solution all of the iron contained in the feedstock remains in the insoluble residue, in the most part as pyrite which is hardly attackable in these conditions. With regard to this advantage of carrying out the lixiviation in a neutral medium there is the, easily surmountable difficulty of oxidation of part of the sulfur of the sulfide (including the one of pyrite) asulfate.

This partial oxidation of the sulfide to sulfate takes place in a different manner depending on the sulfide. For example, for sphalerite, it takes place according to the following equation:

$4SZn + 6ClNH_4 + 3\ 1/2O_2$ -->
--> $3S + SO_4^{2-} + 3Zn(NH_3)_2^{2+} + 6Cl^- + Zn^{2+} + 3H_2O$ (5)

The $SO_4^{2-}$ ion, that does not unfavourably affect either the lixiviation or the extraction, must be drained in some step of the process so that it does not accumulate. This is easily achieved by adding calcium hydroxide:

$SO_4^2 + 2ClNH_4 + ZN^{2+} + Ca(OH)_2$ -->
--> $SO_4Ca.2H_2O + Zn(NH_3)_2^{2+} + 2Cl^-$ (6)

so that the following overall equation can be written for the reaction:

$4SZn + 8ClNH_4 + Ca(OH)_2 + 3\ 1/2O_2$ -->
--> $3S + SO_4Ca.2H_2O + 4Zn(NH_3)_2^{2+} + 8Cl^- + 3H_2O$ (7)

which only differs from (1) in that there is a lower production of elemental sulfur at the cost of the corresponding formation of gypsum that can be obtained as a easily marketable pure product.

Something similar happens with the oxidation, which takes place in a small proportion, in a neutral

medium of the pyrite:

$$2S_2Fe + 8NH_3 + 7\,1/2O_2 + 5H_2O \dashrightarrow$$
$$\dashrightarrow 4SO_4^{2-} + 8NH_4^+ + 2FeOOH \quad (8)$$

which will also imply a certain consumption of ammonia (at the cost of that formed in reaction (1'), for example), but which, likewise, will be returned to the system after precipitation with lime.

The way to carry out the method is indicated hereinafter:

The concentration in chloride ion of the lixiviating solution must be enough to basically ensure the solubility of the lead in accordance with its content in the treated product, density of pulp and temperature used. The isotherms of solubility of lead chloride in ammonium chloride solutions are given in figure 1.

While in the case of oxides the solution can be effected in a single stage at a temperature between 50 and 100º C, in a time that depends on the temperature chosen (in general 60 - 700º C and a time of 2 hours is recommendable), in the case of polymetallic sulfides , lixiviation in two stages in countercurrent is advisable to attain good yields with attack times of 1 to 2 hours. The loaded solution is obtained in the first stage while the depleted residue will be given rise to in the second stage. Enough acid is added to the return solution to maintain at the end a pH lower than 5.

Carrying out the lixiviation under suitable conditions, the attack is basically produced upon the non-ferrous sulfides, the pyrite remaining in the most part unattacked. As a result of the lixiviation a solution is obtained in which the non-ferrous metals to be recovered are dissolved and a residue, in which along with the unattacked pyrite there is an important proportion of the sulfur of the attacked sulfides in the form of elemental sulfur.

After solid-liquid separation, the loaded lixiviation solution passes to a series of stages, where successively, it is treated to separate and recover each one of the dissolved metals. In these stages regeneration of the solution, which again remains in the initial conditions to be used with a new lot of ore is produced at the same time.

Upon carrying out the lixiviation with ammonium chloride, due to the buffer effect very pure solutions are obtained. This purity refers to certain elements such as Fe, As, Sb, etc. whose solubilization is considered as undesirable, due to the fact that the presence thereof complicates subsequent treatment of the lixiviation solution. This feature represents a great advantage of the present method, given, in general the abundant presence of these elements in the materials to be treated.

Iron, which in the case of sulfide concentrates is the most abundant impurity, is forming part of the pyrite, which as has been indicated is attacked only a little in the neutral lixiviation, and as a constitutuent of the chalcopyrite and replacing isomorphically up to 10 % of the zinc atoms in the sphalerite. This iron undergoes a total attack, but given the pH of the solution, it also passes to the solid residue upon undergoing total hydrolysis, precipitating in the most part in the form of hydrated ferric oxide and, in a smaller proportion, in the form of other species such as jarosite.

A very important matter, as can be inferred from the isotherms of figures 2 and 3 is that of the solubilities of amines and in particular that of copper (II.) The solubility of zinc and copper amines increases considerably with temperature. Despite everything, the solubility of cupric diamine continues to be low, even at a temperature of 100º C, thus in the case of materials with a significant copper content, the solubility of the diamine thereof could be the limiting factor of the density of pulp to be used.

The high solubility of the cuprous amines permits the stabilization of solutions that are obtained in lixiviation,, by means of passing of the copper to this state of oxidation, an operation which is easy to carry out, above all in the case of treatment of metallic polysulfides. In this way crystallization of the cupric diamine is avoided, which would otherwise be produced upon the temperature dropping during treatment of the solution.

In the case of metallic polysulfides, lixiviation is carried out with solutions that have a high concentration of ammonium chloride, preferably between 5 and 7 mol per 1000 g. of water. Oxygen is used as an oxidizing agent and certain metallic ions are used as the catalyst, which like copper, have a double degree of valence. Given the small amount of copper needed, the content of this element that always exists in sulfide concentrates tends to suffice.

Neutral lixiviation is carried out between 80 and 150º C and at a partial oxygen pressure between 50 and 500 kPa (≈0.5 to 5 atm.)

In the neutral lixiviation stage, the solution that is going to pass to the separation and recovery treatment of the dissolved metals is produced. Before this, when the copper content thereof makes it necessary, the solution is stabilized by passing most of this element to its cuprous form. This may be done, after eliminating the oxygen atmosphere, either taking advantage of the reducing power of the concentrate

that is still undissolved, continuing stirring for a certain time, or else if this has already been used up by adding the corresponding amount of concentrate and continuing the stirring for some 30 minutes at 100º C. The amount of ore to be added is not critical since it is neither necessary to reduce all the cupric cation nor is the excess of added ore that will be lixiviated in the second acid stage lost.

Acid lixiviation is done under conditions similar to those of neutral lixiviation, with a temperature between 80 and 150º C and with a partial oxygen pressure between 50 and 500 kPa.

Treatment of the lixiviation solution to separate and recover each one of the solubilized metals is carried out in a series of successive stages, in which conventional operative techniques of extraction with solvents, ionic exchange, cementation, precipitation or crystallization. The order of the stages is not essential and their sequence can be varied, adapting in each case to the nature, composition and lays of the feedstock to be treated. The present method of invention is characterized because in carrying out these stages the ammonia that is produced in lixiviation is used. This permits the use of the cationic separation methods in which an amount of acid equivalent to the amount of extracted metal is generated. Neutralization of this acid by ammonia completely displaces the equilibrium of the corresponding reaction, enhancing and facilitating the separation.

The elimination of sulfates, an operation which must precede extraction with solvents, is done by precipitation as gypsum ($SO_4Ca.2H_2O$) by means of adding calcium oxide (CaO), calcium chloride ($Cl_2Ca$) or a mixture of both, in terms of the balance of ammonia and chloride that is produced in the circuit. The use of calcium oxide permits compensation of the ammonia deficit that might exist. In this case, the best results in precipitation have been attained by previously dissolving the lime in a certain amount of return solution. For this purpose, one part of the solution obtained after extraction of zinc is used, which in turn implies effecting a dilution of the concentration of this metal. Making this dilution has advantageous effects in a double sense: on the one hand it avoids precipitation of the diamine, which can be produced upon increasing the concentration of ammonia, and on the other hand, it removes the solution from saturation with regard to the lead chloride, since in this case its solubility increases upon reducing the concentration of zinc for a same concentration in ammonium chloride.

The resulting solution passes to be treated in a series of extraction-reextraction circuits with cationic extraction reagents. Extraction with solvents and/or ionic exchange can be used. The number of circuits to be installed depends on the number of metals that are thus separated and it is obviously a consequence of the composition of the treated feedstock.

The extraction of zinc is done first preferably at a temperature between 30 and 60º C, using DEHPA (di-2-ethyl-hexyl-phosphoric acid) as extractant dissolved in kerosene using TBP or alcohols of 8 to 12 carbon atoms as modifiers. Although DEHPA is the most advisable reagent, in some cases it could be substituted, if the economy of the methods were to make it advisable by organic acids such as Versatic acid.

After extraction of the zinc and prior to the stage of extraction of the copper, the solution is oxidated by passing the cuprous cation to the cupric cation. This oxidation can be done with chlorine or with oxygen; in this last case ammonia is generated:

$$Cu^{+} + NH_4^{+} + 1/4\ O_2 \dashrightarrow CuNH_3^{2+} + 1/2\ H_2O$$

The extraction of the copper can be done with commercial products such as LIX 65N or LIX 622 (LIX is a trade mark registered by the firm Henkel) or any other oxime or 8-hydroxyquinoline derivatives (oxines), all of them compounds which have a great selectivity for copper even in an acid medium. Thus, it results that, even in the case of this stage being attained with a $NH_3/Cu$ ratio lower than 2, the extraction can be carried out without problems and, even, the fact that in the refined product there remains a certain acidity, it would be convenient, since, in any case, the return solution, that is used in the stage of acid lixiviation, this acidity is needed.

Due to the need of cooling the solution from approximately 100º C to those at which the lixiviation is done to some 50º C, temperature at which the extraction is done, in the cases in which the lead content is relatively high, the recovery of the lead can be done at this point, prior to elimination of the sulfates. The cooling, which can be done in crystallizing evaporators, permits, on the one hand to separate the lead in the form of $Cl_2Pb$ at the same time that the balance of water of the circuit is adjusted.

Example no. 1

1000 g of an overall flotation concentrate of the following composition was used:

| | | | |
|---|---|---|---|
| Zn | 33.0 % | Cu | 3.4 % |
| Pb | 7.8 % | Fe | 17.1 % |
| S | 34.6 % | As | 0.29 % |
| Sb | 0.32 % | Ag | 0.0176 % |

This concentrate was essentially constituted by the following mineralogical species: pyrite, chalcopyrite, sphalerite and galena. A significant fraction of this last species was found oxidated to sulfate. 80 % of the product had a sinze smaller than 20 μm.

1000 g. of the concentrate that was lixiviated in a reactor pressurized to 115º C with 15.0 kg. of a solution whose composition is given in column (1) of TABLE I were taken. During lixiviation which lasted 1 h. a partial oxygen pressure of 0.1 mPa (approx. 1 atm.) was kept in the reactor. Then the reactor was depressurized continuing stirring for 10 minutes, after which stirring stopped leaving the residue settle. Then 14.7 kg of solution whose composition is given in column (2) of TABLE I were siphoned off, 1.5 kg. of pulp remaining.

The reactor where the residue soaked in the lixiviating solution remained is now loaded with 13.6 kg. of solution whose composition is given in column (3) of TABLE I. Then the pulp was heated to 115º C and lixiviation continued under a partial oxygen pressure of 0.1 MPa for 1 hour. It should be made clear that the amount of acid of solution (3) fundamentally depends on the amount of sulfides that have remained without lixiviation in the first stage; the acid is added so that, when the lixiviation ends the final acidity, expressed in $SO_4H_2$, is not lower than 0.1 g/l. The pulp is filtered and the cake was washed with 0.5 kg. of water. The filtrate plus the washing solution provide 14.4 kg. of solution of a composition practically identical to that of column (1) of TABLE I and it is used in a new lixiviation.

TABLE I

SOLUTIONS OF EXAMPLE 1

| | (1) | (2) | (3) | (4) |
|---|---|---|---|---|
| Solution, kg | 15.00 | 14.68 | 13.62 | 14.40 |
| Water kg | 10.67 | 10.00 | 9.60 | 9.57 |
| Composition (g/1000 to $H_2O$): | | | | |
| $SO_4^{2-}$ | 55.6 | 80.2 | 59.2 | 50.2 |
| $Cl^-$ | 212.1 | 212.7 | 219.0 | 219.6 |
| $NH_4^+$ | 120.5 | 113.6 | 128.9 | 106.1 |
| $NH_3$ | - | 6.8 | - | 17.7 |
| $Zn^{2+}$ | 10.9 | 37.2 | 5.0 | 38.9 |
| Total Cu * | 1.6 | 4.2 | 1.0 | 4.4 |
| $Pb^{2+}$ | 5.3 | 12.3 | 4.7 | 4.8 |
| $Ca^{2+}$ | 1.0 | 0.9 | 1.0 | 1.0 |
| Acidity** | 0.1 | - | 10.9 | - |

* Sum of $Cu^{2+}$ § $Cu^+$

** Expressed in $SO_4H_2$

As a result of this double lixiviation some 800 g. of wet cake (some 550 g of dry cake) were obtained with the following composition:

| | | | |
|---|---|---|---|
| Zn | 1.50 % | Cu | 0.19 % |
| Pb | 0.45 % | S (elemental) | 30.0 % |
| Fe | 31.0 % | S (total) | 50.4 % |
| As | 0.53 % | Sb | 0.58 % |
| Ag | 0.001 % | | |

The fertile solution (column 2) was concentrated up to a weight of approximately 13.8 kg by evaporation of 890 g of water: the concentrated solution was cooled up to 50º C whereby 104 g of $Cl_2Pb$ were separated by crystallization.

The mother liquors were treated with a milk of lime which contained 185 g. of CaO and 0.5 g of citric acid, with which a significant part of the sulfates contained was precipitated. After separating by filtration the gypsum obtained and combining the wash waters 14.4 g of solution whose composition is given in volumn (4) of TABLE I were obtained.

Example 2

The solution obtained in the above example whose composition is given in column (4) of TABLE I was used. A reactor with a total capacity of 300 cc with a water casing thermostated to 50±0.5º C, was loaded with 80 cc of this solution (89.8 g) and 120 cc of an organic solution whose v/v composition was the following:

| | |
|---|---|
| DEHPA | 20 % |
| TBP | 5 % |
| Kerosene 200/260 | 75 % |

The mixture was stirred vigorously in a nitrogen atmosphere, for 2 minutes, after which it was left to stand separating the two phases. The composition of the aqueous solution obtained is given in column (1) in TABLE II and the organic phase in equilibrium is given in column (2.) The aqueous phase obtained (column 1) is the one used to recover the copper as is indicated in Example 3.

The composition of the organic phase obtained, which, as can be seen carries significant amounts of $Cu^{2+}$ and $Ca^{2+}$ is given in column (2) in TABLE II. In order to prevent these ions from passing to the zinc sulfate solution that is obtained in the re-extraction the organic phase obtained was washed with 25 cc of a zinc chloride solution (46.3 g/l of $Zn^{2+}$ ) which is at a pH of 2.5. As a result of this washing the organic phase is enrichened with zinc while the content thereof of Cu, Pb and Ca (column (3) of TABLE II) is practically eliminated.

TABLE II

SOLUTIONS OF EXAMPLE 2

| | (1) | (2) | (3) |
|---|---|---|---|
| | g/kg $H_2O$ | g/l de org. sol. | |
| $SO_4^{2-}$ | 50.2 | - | - |
| $Cl^-$ | 219.4 | - | - |
| $NH_4^+$ | 124.8 | - | - |
| $NH_3$ | - | - | - |
| $Zn^{2+}$ | 4.6 | 16.2 | 18.0 |
| $Cu^{2+}$ | 0.7 | 0.15 | 0.009 |
| $Cu^+$ | 3.4 | - | - |
| $Pb^{2+}$ | 4.7 | 0.009 | 0.003 |
| $Ca^{2+}$ | 0.3 | 0.32 | 0.020 |
| pH | 3.9 | - | - |

Example 3

The solution obtained in example 2 (column (1) of TABLE II) was used. It was oxidated with oxygen,

keeping the temperature at 50º C. (It should be noted that in these conditions the oxidation time depends on the partial oxygen pressure, as well as the degree of oxidation that is desired. The results obtained at this temperature, bubbling air over the solution whose composition was given in column (4) of TABLE I are given in TABLE III.

TABLE III

EFFECT OF THE PARTIAL OXYGEN PRESSURE

| Time | Air | | Oxygen | |
|---|---|---|---|---|
| min | $Cu^{+}$ | $Cu^{2+}$ | $Cu^{+}$ | $Cu^{2+}$ |
| 0 | 3.98 | 0.56 | 3.70 | 0.74 |
| 2 | - | - | 1.50 | 2.93 |
| 5 | 2.72 | 1.72 | 0.38 | 4.08 |
| 10 | 1.55 | 2.84 | 0.13 | 4.37 |
| 15 | 0.95 | 3.49 | 0.06 | 4.50 |
| 25 | 0.46 | 4.08 | 0.05 | 4.50 |
| 45 | 0.24 | 4.18 | - | - |

(conc. in g/l000 g of $H_2O$)

Once the solution has been oxidated 50 cc of it were taken and placed in a reactor thermostated to 50±0.5 º C, to which another 50 cc of an organic solution of LIX 65N at 20 % (v/v) in kerosene 200/260 were added. This mixture was stirred for 5 minutes, after which it was left to stand in order to separate the two phases. The composition of the aqueous phase is given in column (1) in TABLE IV and the composition of the copper in the organic phase is given in column (2.) The composition of the refined product (aqueous phase after extraction) is, as is shown, very similar to that which has been taken as the starting solution in example 1 (column 3) of TABLE I. This shows that after small corrections the lixiviation solution is regenerated.

TABLE IV

SOLUTIONS OF EXAMPLE 3

| | 1 | 2 |
|---|---|---|
| | g/kg of water | g/l of org. sol. |
| $SO_4^{2-}$ | 49.8 | - |
| $Cl^-$ | 219.0 | - |
| $NH_4^+$ | 125.0 | - |
| $Zn^{2+}$ | 4.6 | - |
| $Cu^{2+}$ | 0.1 | 3.0 |
| $Pb^{2+}$ | 4.7 | - |
| $Ca^{2+}$ | 0.3 | - |
| Acidity * | 2.8 | - |

* Expressed in $SO_4H_2$

Example 4

500 g. of an impure zinc oxide obtained by volatization roasting (Waelz method) of industrial residue rich in zinc which had the following composition

| | | | |
|---|---|---|---|
| Zn | 52.0 % | Cu | 0.58 % |
| Pb | 11.3 % | Fe | 3.7 % |
| Cl | 3.6 % | | |

were used.

They were lixiviated with a solution whose weight and composition are given in column (1) of TABLE V. The pulp formed is stirred in a reactor at 60º C at atmospheric pressure for 1 h. A residue which washed and dried weighed 83 g was separated by filtration and it had the following composition:

| | | | |
|---|---|---|---|
| Zn | 21.0 % | Cu | 0.9 % |
| Pb | 5.7 % | Fe | 22.4 % |
| Cl | 0.5 % | | |

and a solution whose weight and composition are given in column (2) of TABLE V.

17 g. of zinc powder was added to the solution obtained, maintaining gentle stirring at 60º C for 30 minutes. Afterwards, a cement which, washed and dried, had the following composition:

| | | | |
|---|---|---|---|
| Zn | 4 % | Cu | 5 % |
| Pb | 90 % | | |

was separated by filtration and a solution whose weight and composition are given in column (3) of TABLE V. 100 cc (108.8 g) of the obtained solution, after cementation, were taken and placed in a reactor thermostated to 50±0.5º C to which 147 cc of an organic solution of the following composition:

| | |
|---|---|
| DEHPA | 20 % |
| Isodecanol | 8 % |
| Kerosene 200/260 | 72 % |

were added.

This mixture was stirred for 2 minutes, after which it was left to stand to separate the two phases. The composition of the aqueous phase is given in column (4) of TABLE V and the composition of the organic phase is given in column (5)

TABLE V

SOLUTIONS OF EXAMPLE 4

| | (1) | (2) | (3) | (4) | (5) |
|---|---|---|---|---|---|
| Solution, kg | 11.00 | 11.41 | 11.39 | | |
| Water kg | 8.33 | 8.40 | 8.40 | | |
| Composition | g/1000 g $H_2O$ | | | | g/l O |
| $Cl^-$ | 211.7 | 212.0 | 212.0 | 212.0 | |
| $NH_4^+$ | 107.8 | 90.6 | 90.6 | 106.4 | |
| $NH_3$ | - | 15.0 | 15.0 | pH=4.1 | |
| $Zn^{2+}$ | - | 29.0 | 30.9 | 2.5 | 15.0 |
| $Cu^{2+}$ | - | 0.28 | 0.015 | 0.006 | 0.005 |
| $Pb^{2+}$ | - | 6.1 | 1.2 | 1.2 | |
| $Ca^{2+}$ | - | 0.08 | 0.080 | 0.040 | 0.030 |
| $Mg^{2+}$ | - | 0.027 | 0.027 | 0.012 | 0.010 |

PATENTS CITED IN THE BIBLIOGRAPHY THAT USE AMMONIUM CHLORIDE

US 4291920
In situ exploitation of deep set porphry ores
C.A. 96-0891920
US 3979265
Recovery of metals from sulfur-bearing ores
C.A. 85-164155
US 3694147
Purification of mylybedenum trioxide

C.A. 78-018418
Span 545698
Hydrometallurgical recovery of metals from complex sulfides
C.A. 106-00784711

## Claims

1. Hydrometallurgical method for the recovery of non-ferrous metals such as zinc, copper and lead from sulfurized and oxidized materials that contain them, characterized by their lixiviation with a hot concentrated solution of ammonium chloride that permits the formation of the corresponding amines of the metals to be recovered (except lead) in such a way that, after purification by conventional means and cooling the solution and separating the lead chloride by crystallization, the zinc and copper are extracted from it by means of acid organic solvents that neutralize the amines regenerating the ammonium chloride.

2. Method according to claim 1 characterized because the material to be treated can be a metallic sulfide concentrate (mixtures of ore species, such as sphalerite, chalcopyrite, galena, pyrite), carrying out the lixiviation in the presence of oxygen and copper salts.

3. Method according to claim 1 characterized because the material to be treated may be a mixture of zinc, copper and lead oxides, although these are found impurified by chlorides.

4. Method according to claim 1 characterized because the concentration of ammonium chloride in the lixiviation solution is between 3 and 9 mol per kg. of water.

5. Method according to claims 1 and 2 characterized because the lixiviation is carried out between 80 and 150º C with an oxygen overpressure between 50 and 500 kPa (approx. 0.5 to 5 atm.) in two stages in counter-current: a neutral one which gives rise to the loaded solution and a depletion acid of the concentrate.

6. Method according to claims 1 and 3 characterized because the lixiviation temperature is between 50 and 100º C.

7. Method according to claim 1 characterized because of the possibility of using, without adding neutralizers, organic acids such as di-2-ethyl-hexyl-phosphoric acid, for the extraction of the zinc and of oximes and oxines for the extraction of the copper.

# INTERNATIONAL SEARCH REPORT

International Application No PCT/ES 90/00019

**I. CLASSIFICATION OF SUBJECT MATTER** (if several classification symbols apply, indicate all) [6]

According to International Patent Classification (IPC) or to both National Classification and IPC

Int. Cl.[5] . C 22 B 3/00, C 22 B 13/10

**II. FIELDS SEARCHED**

Minimum Documentation Searched [7]

| Classification System | Classification Symbols |
|---|---|
| Int.Cl[5] | C 22 B |

Documentation Searched other than Minimum Documentation to the Extent that such Documents are Included in the Fields Searched [8]

**III. DOCUMENTS CONSIDERED TO BE RELEVANT** [9]

| Category [*] | Citation of Document, [11] with indication, where appropriate, of the relevant passages [12] | Relevant to Claim No. [13] |
|---|---|---|
| Y | DE, B, 2454332 (W.H. BURROWS) 24 July 1975 see claims 1-3,7; column 2,lines 13-42;column 3, lines 22-46 -- | 1-7 |
| Y | ES,A,545698 (CONSEJO SUPERIOR INVESTIGACIONES CIENTIFI-CAS) 16 January 1986 see page 4,line 15 - page 7,line 10; pages 8,9; page 12, line 20 - page 13 , line 7; claims cited in the application -- | 1-7 |
| A | CA,A, 1130237 (MINISTRY OF ENERGY,MINES AND RESOURCES CA) 24 August 1982 see page2,line 25 - page 3, line 6; pages 6-8; claims 1,2,14 -- | 1,3,7 |

./.

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

**IV. CERTIFICATION**

| Date of the Actual Completion of the International Search | Date of Mailing of this International Search Report |
|---|---|
| 26 October 1990 (26.10.90) | 22 November 1990 (22.11.90) |
| **International Searching Authority** | **Signature of Authorized Officer** |
| | |

III. DOCUMENTS CONSIDERED TO BE RELEVANT (CONTINUED FROM THE SECOND SHEET)

| Category* | Citation of Document, with indication, where appropriate, of the relevant passages | Relevant to Claim No |
|---|---|---|
| A | US, A, 3950487 (J.P. PEMSLER) 13 April 1976 see abstract; claims 13,14 | 2,7 |
| A | US, A, 3728105 (R. SKARBO) 17 April 1973 see column 3, lines 10-18, 64-70; example V; claims 1,3,7,8 | 1-4 |
| A | FR, A, 2433052 (UOP) 7 March 1980 | |
| A | FR, A, 672416 (E. ASHCROFT) 27 December 1929 | |
| A | AU, A, 480846 (ICI) 11 February 1977 | |
| A | AU, A, 489575 (ICI) 23 December 1977 | |